# EUROPEAN PATENT SPECIFICATION

(11) **EP 2 629 646 B1**
(45) Date of publication and mention of the grant of the patent: **07.10.2015**
(21) Application number: 11785102.2
(22) Date of filing: 18.10.2011
(51) Int. Cl.: A47B 96/06

(54) **SUPPORT FITTING**
STÜTZTEIL
ACCESSOIRE DE SUPPORT

(30) Priority: 18.10.2010 IT PN20100061
(43) Date of publication of application: 28.08.2013
(73) Proprietor: Perin SpA, 31018 Albina di Gaiarine (TV) (IT)
(72) Inventor: PERIN, Pierantonio, 31018 Albina di Gaiarine (TV) (IT); CASAGRANDE, Mirco, 31018 Albina di Gaiarine (TV) (IT)
(74) Representative: Citron, Massimiliano
(86) International application number: PCT/IB2011/054626
(87) International publication number: WO 2012/052917

(56) References cited:
- EP-A1- 0 220 337
- EP-A2- 0 400 388
- AT-B- 413 256
- US-A- 4 060 949
- US-B1- 6 257 796

## Description

The invention relates to a support fitting.

Support fittings or accessories are known, see e.g. EP 0 400 388 with the function to connect jointly a shelf on the side of the relative furniture. These accessories are made of a screw inserted in their side and a cylindrical body, housed in a cut-out cavity into the shelf. The cylindrical body exhibits on the face on sight a suitably shaped seat to accommodate and block the screw head therein. The cylindrical body is pre-mounted in the shelf, and during assembly the user inserts the screw in the seat making the cylindrical body lower onto it.

Prior to delivery, by an automatic screwing machine the screw is screwed on the side, and the seat is milled in the shelf for mounting then the cylindrical body inside it.

Clearly, having two pieces (the screw and the cylindrical body) leads to problems of various types: e.g. the processing time of the automatic machine and costs for the shelf material increase. Besides, one can not perform the installation manually or discharge it on the final purchaser, because the cylindrical body should always be fitted accurately the first time.

The main object of the invention is to improve this state of the art.

Another object is to solve the problem of reducing the number of components of a shelf support fitting, and/or making the shelf support more compact and/or robust, and/or make the shelf fitting easier to assemble, and with less work phases.

The objects are obtained by a support fitting for a shelf as in Claim 1, i.e. comprising a main body to be housed in a seat obtained in an edge of the shelf, the body comprising a pass-through cavity to contain a transverse screw, to be fixed to the side, with an axis substantially parallel to the larger surface of the shelf, and the fitting is equipped with a movable member capable of being pressed against the walls of the seat to anchor the main body thereto.

The body, for better stability and centering, can comprises a base (preferably substantially flat) which after mounting inside the shelf locates about flush with the larger surface of the shelf.

The movable member can be a flexible element which can bend to engage the seat, e.g. a wall of the main body or of the base, which is expandable toward the outside by means of a push member such as a screw or an eccentric device.

The movable member can also be slidingly guided, e.g. on or in the main body or on or in the base, to move linearly and/or can be rotatable e.g. on or in the main body or on or in the base.

It is preferred that the movable member be housed, rotatably or slidingly, in a cavity of the main body. This allows the maximum compactness and reduction of parts. To assure the perfect withdrawal of the movable member, and its hiding during assembly not to form an obstacle, it is good if the cavity is sized to completely contain the movable member.

If the movable member is rotatable, it is preferred that it has a rotation axis substantially perpendicular to the base, in order to make it penetrate in the seat walls where it can best anchor. Essentially in this manner it can protrude from a side opening of the main body after its rotation and stick into the chipboard. To the aim, it is advantageous that the cavity which houses the movable member is obtained between the base and the pass-through cavity, so that the movable member can penetrate in a wall of the seat where the chipboard is more resistant, usually e.g. at a distance of 2÷6 mm from the shelf surface.

Advantageously the opening has a profile substantially complementary to that of the movable member. This allows not only to reduce the hollow spaces in the shelf, which are structural weakenings, but also to favor the stability of the rotatable member which is guided by the opening's edges. Such edges can comprise weakened zones to allow their bending in order to trap the movable member into the relative cavity after it has been mounted therein during the shelf assembly. Said zones can be chosen of small area, so as not to jeopardize the fitting's sturdiness, but big enough to allow a deformation of all or part of the edges. A simple mounting procedure without moving parts or other fixing means is obtained for said movable member.

To ease the clamping maneuver the base can comprise an opening through which a portion of the movable member is operable, so that a torque or a force can be exerted on the movable member to make it move.

Among the structural variants of the movable member, a blade and a hexagonally-socketed head eccentrically integral with the blade resulted very simple to build and reliable in the blocking. The blade, better if sharpened or pointed on the side facing the outside, has a high penetrating capacity, while the hollow head easily allows the forcing thereof by means of an allen-screw.

The relative motion of the moving member with respect to the main body can be guided and/or assisted by shapings, or driving means or driving mechanisms (e.g. guides derived as grooves or slots in the main body or base). A very simple but with excellent stability solution, working only by interference of parts, is obtained if the cavity that houses the movable member comprises a step formation, and the movable member comprises an undercut, shaped preferably in complementary manner, for resting upon and sliding on said formation.

The invention and its advantages will be even clearer from the following description of a preferred embodiment of shelf support fitting, as shown in the drawing in which
Figure 1 shows a three dimensional view of the shelf fitting;
Figure 2 shows a top view of the shelf fitting;
Figure 3 shows a side view of the shelf fitting;
Figure 4 shows a bottom view of the shelf fitting;
Figure 5 shows a vertically cross-sectioned view of the shelf fitting according to the plane V-V;
Figure 6 shows a three dimensional view of a component of the shelf fitting;
Figure 7 shows a bottom view of the component in Figure 6;
Figure 8 shows a cross-sectional view of the shelf fitting according to the plane VIII-VIII;
Figure 9 shows a cross-sectional view of the component in Figure 6 according to the plane IX-IX.

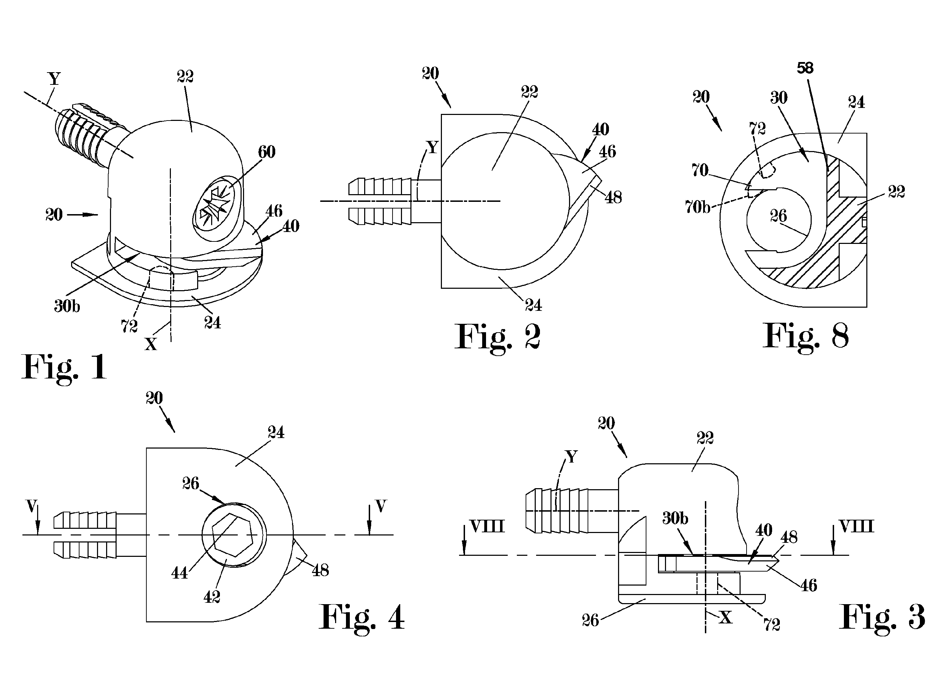

In the figures a shelf support fitting, indicated by 20, serves to support, see Fig. 5, a shelf RP on a side F (shown hatched) of a cabinet (not shown).

The shelf fitting 20 comprises a main body 22 shaped as a turret or shell, preferably of circular section, which is housed in a seat SD (dashed) obtained in an edge PR of the shelf. The body 22 comprises a base or plate 24 substantially flat and an inner pass-through cavity 28 which contains, along a direction or axis Y substantially parallel to the larger surface of the shelf RP, a transverse screw 60 to be screwed into the side F. The screw 60 serves to fix the shelf fitting 20 to the side F before the latter is put into the seat SD.

Inside a cavity 30 of the body 22 is turnably housed a moving member 40, which has the function to be pressed against and penetrate into the walls of the seat SD to anchor the body 22 thereinto. From the figures it is noted that the rotation axis X of the movable element 40 is substantially perpendicular to the base 24, and also to the larger surface of the shelf RP (and to the axis Y).

The cavity 30 is obtained in the body 22 between the base 24 and the pass- through cavity 28. This allows to the movable member 40 to be very close to the flat surface of the shelf RP, and thus penetrate into a wall of the seat SD at a distance from such surface of about 2-6 mm. The shelves are in fact usually made of chipboard, whose density is maximum within a superficial thickness of 4-5 mm, so the member 40 is able to get stuck in the area with higher hardness for a greater grip. Clearly, according to the structural characteristics of the chipboard or the shelf one can advantageously choose the depth with respect to the base 24 (and to the surface of the shelf RP) in order to achieve the best anchoring.

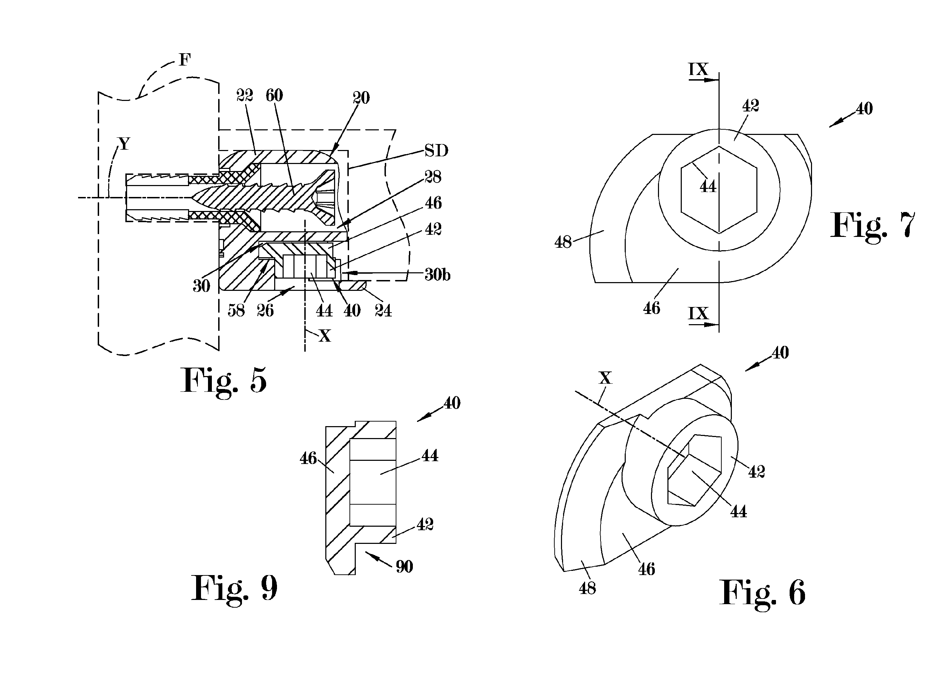

The body 22 comprises a front surface slot or opening 30b which opens internally into the cavity 30 and provides a span in the lateral surface of the body 22. From the slot 30b, with shape elongated parallel to the base 24, the movable member 40 can protrude as a result of its rotation. The slot 30b has a profile substantially complementary to that of the member 40, so as to facilitate at most the insertion of the second inside the first, up to inside the cavity 30. To the aim the edges 70 of the slot 30b are or comprise weakened areas 72 (dashed), e.g. with cut-outs or empty and/or recessed areas 72, intended to be mechanically bent to catch the member 40 into the cavity 30. See, for example. Figure 8, in which is indicated by 70b a portion or lip of the edge folded towards the inside of the body 22.

The insertion of the member 40 into the cavity 30 can be done manually, but preferably by an automatic machine, which performs a mounting process with the steps of (i) inserting the member 40 into the cavity 30 and then (ii) tightening and/or slightly distorting the edges 70.

Note that the cavity 30 is sized to completely contain the movable member 40, so that it does not protrude from the contour of the body 22 and the insertion of the shelf fitting 20 into the seat SD is favored. Also note that if the cavity 30 is complementary in shape to the member 40, not only the walls of the cavity 30 can serve as a guide for the member 40, but also the shelf fitting 20 is minimally weakened.

The base 24 comprises a circular opening 26 which communicates with the cavity 30 and through which is accessible a cylindrical portion 42 of the member 40. The portion 42 comprises a hexagonal-socketed head 44, preferably of cylindrical shape and with diameter about equal to that of the opening 26, e.g circular. So by an allen screw one can impart a torque, passing through the base 24, to make the member 40 rotate.

The member 40 comprises a blade 46, eccentrically integral with the cylindrical portion 42 and having a side 48 sharpened towards the outside to knock in the cavity SD. The blade 46 protrudes cantilevered from the cylindrical portion 42 forming a right undercut 90, see Fig. 9. The blade 46 rests on a step 58, see Fig. 8, determined by the shape of the walls of cavity 30. The coupling between the undercut 90 and the step 58 ensures the guide of member 40 while it is moved and its keeping in position.

To mount the shelf RP on the side of F one proceeds as follows.

The shelf fitting 20 is fixed to the side F by the screw 60. Then the shelf RP is rested on the shelf fitting 20, inserting up to the bottom the body 22 in the seat. Then the portion 42 is rotated by an allen wrench to move the member 40 out from the side of the body 22 is stick it into a wall of the seat SD. Now the shelf fitting 20 is made stably integral with the shelf RP, preventing any detachment.

## Claims

1. Support fitting (20) for supporting a shelf (RP) on a side (F) of a piece of furniture, comprising:
- a main body (22) destined to be housed in a seat (SD) obtained in an edge of the shelf, the body comprising a pass-through cavity (28) to contain a transverse screw (60), with an axis (Y), to be fixed to the side, and
- a movable member (40) capable of being pressed against the walls of the seat to anchor the main body thereto.

2. Support fitting according to claim 1, comprising a substantially flat base, and the axis (Y) of the transverse screw is substantially parallel to the base.

3. Support fitting according to claim 1 or 2, wherein the movable member is slidingly guided, on the main body or on or in the base, to move linearly or is rotatable on the main body or on or in the base.

4. Support fitting according to claim 1 or 2, wherein the movable member is housed in a cavity (30) of the main body, the cavity being sized to completely contain the movable member.

5. Support fitting according to claim 4, wherein the movable member is slidingly housed in the cavity (30).

6. Support fitting according to claim 2 or 4, wherein the movable member has a rotation axis (X) substantially perpendicular to the transverse screw's axis (Y), so as to protrude from a side opening (30b) of the main body due to its rotation.

7. Support fitting according to claim 6, wherein the opening has a profile substantially complementary to that of the movable member.

8. Support fitting according to claim 6 or 7, wherein the edges of the opening comprise weakened zones (72) to allow bending of the edges in order to trap the movable member into the relative cavity.

9. Support fitting according to any one of the preceding claims, wherein the movable member is coupled to the main body in order to be able to penetrate into a wall of the seat at a distance from the surface of the shelf of about 2 ÷ 6 mm.

10. Support fitting according to any one of the preceding claims 4 to 9, wherein the cavity (30) is obtained between the base and the pass-through cavity.

11. Support fitting according to claim 10, wherein the base comprises an opening (26) through which is accessible a portion (42) of the movable member, a torque or a force being exertable on the portion to move it.

12. Support fitting according to any one of the preceding claims, wherein the movable member comprises a blade (46) and a hexagonally-socketed head (42) eccentrically integral with the blade.

13. Support fitting according to claim 12, wherein the blade is sharpened or pointed on the side facing the outside.

14. Support fitting according to any one of the preceding claims, wherein the cavity (30) which houses the movable member comprises a step formation (58) and the movable member comprises an undercut (90) for resting upon and sliding on said formation.

15. Support fitting according to claim 1 or 2, wherein the movable member is a flexible element, which can bend to engage the seat and is expandable toward the outside by means of a push member.

## Patentansprüche

1. Regalträger (20), um ein Regalbrett (RP) auf einer Seite (F) des Möbelstückes zu stützen, der Folgendes umfasst:
- einen Hauptkörper (22), der dazu bestimmt ist, in einem Sitz (SD) untergebracht zu werden, den man in einer Kante des Regalbretts erhält. Der Körper umfasst einen durchgehenden Hohlraum (28), um eine Querschraube (60), mit Achse (Y), zu enthalten, der an der Seite zu befestigen ist und
- ein bewegliches Element (40), welches die Aufgabe hat, gegen die Wände des Sitzes gedrückt zu werden, um dort Hauptkörper zu verankern.

2. Regalträger gemäß dem Anspruch 1, der eine im Wesentlichen eine flache Basis umfasst und die Achse (Y) der Querschraube ist im Wesentlichen parallel zur Basis.

3. Regalträger gemäß dem Anspruch 1 oder 2, in welchem das bewegliche Element verschiebbar geführt wird, im Hauptkörper oder auf oder in der Basis, um sich linear zu bewegen oder es ist im Hauptkörper oder auf oder in der Basis drehbar.

4. Regalträger gemäß dem Anspruch 1 oder 2, in welchem das bewegliche Element in einem Hohlraum (30) des Hauptkörpers untergebracht ist. Der Hohlraum ist so bemessen, dass er das bewegliche Element vollständig enthalten kann.

5. Regalträger gemäß dem Anspruch 4, in welchem das bewegliche Element schiebbar im Hohlraum untergebracht ist (30).

6. Regalträger gemäß dem Anspruch 2 oder 4, in welchem das bewegliche Element eine Drehachse (X) hat, die im Wesentlichen senkrecht zur Achse (Y) der Querschraube ist, um aus einer seitlichen Öffnung (30b) des Hauptkörpers nach der Drehung überzuragen.

7. Regalträger gemäß dem Anspruch 6, in welchem die Öffnung ein im Wesentlichen komplementäres Profil zu dem des beweglichen Elements hat.

8. Regalträger gemäß dem Anspruch 6 oder 7, in welchem die Kanten der Öffnung geschwächte Bereiche umfassen (72), um die Biegung der Kanten zu ermöglichen, um so das bewegliche Element im entsprechenden Hohlraum einzukeilen.

9. Regalträger gemäß irgendeinem der vorherigen Ansprüche, in welchem das bewegliche Element an den Hauptkörper gekoppelt ist, um in eine Wand des Sitzes in einem Abstand von der Oberfläche des Regalbrettes von etwa 2÷6 dringen zu können.

10. Regalträger gemäß irgendeinem der vorherigen Ansprüche von 4 bis 9, in welchem man den Hohlraum (30) zwischen der Basis und dem durchgehenden Hohlraum erhält.

11. Regalträger gemäß dem Anspruch 10, in welchem die Basis eine Öffnung (26) umfasst, durch welche ein Abschnitt (42) des beweglichen Elements, auf welches ein Drehmoment oder eine Kraft ausgeübt werden kann, um es zu bewegen, zugänglich ist.

12. Regalträger gemäß irgendeinem der vorherigen Ansprüche, in welchem das bewegliche Element eine Lamelle (46) und einen exzentrisch zur Lamelle fest eingebauten Innensechskantkopf (42) umfasst.

13. Regalträger gemäß einem der vorherigen Ansprüche, in welchem die Lamelle auf der Seite, die nach außen gewandt ist, scharf oder spitz ist.

14. Regalträger gemäß einem der vorherigen Ansprüche, in welchem der Hohlraum (30), der das bewegliche Element beherbergt, eine Stufenformation (58) und das bewegliche Element eine Hinterschneidung (90) umfasst, um auf besagter Formation ruhen und gleiten zu können.

15. Regalträger gemäß dem Anspruch 1 oder 2, in welchem das bewegliche Element ein flexibles Element ist, das gebogen werden kann, um den Sitz einzunehmen und nach außen durch ein Schiebeelement erweiterbar ist.

## Revendications

1. Support (20) servant à soutenir une étagère (RP) sur le côté (F) d'un meuble, comprenant :
- un corps principal (22) destiné à être placé dans un logement (SD) obtenu dans un bord de l'étagère, le corps comprenant une cavité traversante (28) pour contenir une vis transversale (60), avec un axe (Y), à fixer au côté, et
- un élément mobile (40) devant être appuyé contre les parois du logement pour y fixer le corps principal.

2. Support selon la revendication 1, comprenant une base fondamentalement plate, et l'axe (Y) de la vis transversale est fondamentalement parallèle à la base.

3. Support selon la revendication 1 ou 2, où l'élément mobile est guidé de manière coulissante dans le corps principal ou sur ou dans la base, pour se déplacer de manière linéaire ou est pivotant dans le corps principal ou sur ou dans la base.

4. Support selon la revendication 1 ou 2, où l'élément mobile est placé dans une cavité (30) du corps principal, la cavité étant dimensionnée pour pouvoir y contenir entièrement l'élément mobile.

5. Support selon la revendication 4, où l'élément mobile est placé de manière coulissante dans la cavité (30).

6. Support selon la revendication 2 ou 4, où l'élément mobile a un axe de rotation (X) fondamentalement perpendiculaire à l'axe (Y) de la vis transversale, de manière à dépasser d'une ouverture latérale (30b) du corps principal après la rotation.

7. Support selon la revendication 6, où l'ouverture a un profil fondamentalement complémentaire à celui de l'élément mobile.

8. Support selon la revendication 6 ou 7, où les bords de l'ouverture comprennent des zones affaiblies (72) permettant aux bords de se plier pour pouvoir emprisonner l'élément mobile dans la cavité correspondante.

9. Support selon l'une quelconque des revendications précédentes, où l'élément mobile est couplé au corps principal de manière à pouvoir pénétrer dans une paroi du logement à une certaine distance de la surface de l'étagère d'environ 2÷6 mm.

10. Support selon l'une quelconque des revendications précédentes de 4 à 9, où la cavité (30) est obtenue entre la base et la cavité traversante.

11. Support selon la revendication 10, où la base comprend une ouverture (26) par laquelle est accessible une partie (42) de l'élément mobile sur lequel on peut imprimer un couple ou une force pour le faire bouger.

12. Support selon l'une quelconque des revendications précédentes, où l'élément mobile comprend une lame (46) et une tête (42) à six pans solidaire de façon excentrée de la lame.

13. Support selon l'une des revendications précédentes, où la lame est aiguisée ou pointue sur le côté tourné vers l'extérieur.

14. Support selon l'une quelconque des revendications précédentes, où la cavité (30) accueillant l'élément mobile comprend une formation étagée (58) et l'élément mobile comprend une contre-dépouille (90) pour appuyer et glisser sur ladite formation.

15. Support selon la revendication 1 ou 2, où l'élément mobile est un élément flexible qui peut se plier pour engager le logement et qui est extensible vers l'extérieur au moyen d'un élément de poussée.
